# EUROPEAN PATENT APPLICATION

(11) **EP 4 439 241 A1**
(43) Date of publication of application: **02.10.2024**
(21) Application number: 23165745.3
(22) Date of filing: 30.03.2023
(51) Int. Cl.: G06F 3/01, G06F 3/042

(54) **IMPROVED TOUCHLESS POINTER OPERATION DURING TYPING ACTIVITIES USING A COMPUTER DEVICE**

(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE)
(74) Representative: Best, Bastian

(57) **Abstract**

The present invention concerns a method (500) for touchless control of a computer device (102). The computer device (102) comprises and/or is communicatively coupled to display means (104), sensor means (108) and, optionally, a keyboard (106). The sensor means (108) is configured for observing an interaction space (110) arranged at least partially above an interaction surface, such as a surface of the keyboard (106), a tabletop and/or lap of a user. The method comprises determining (502), based at least partially on sensor data captured using the sensor means (108), a movement of at least one finger (202), preferably of the fingertip of the at least one finger (202), of the user while the user's hands are arranged at least partially above the interaction surface. The method further comprises generating (504) at least one control command configured for manipulating content displayed on the display means (104) in accordance with the movement of the at least one finger.

## Description

### TECHNICAL FIELD

The present invention generally relates to techniques for touchless user interface control, and more particularly to touchless control of a computer device. One application of the disclosed techniques includes moving a pointer, such as a mouse pointer, in accordance with touchless gestures using finger movements in-between a user's typing activities on a keyboard, thereby providing a particularly efficient and ergonomic user experience.

### BACKGROUND

Electronic devices with display screens have become omnipresent in various areas of modern life. Typical examples of these devices include, without limitation, personal computers, laptops, tablets and smartphones. Devices like these usually provide a Graphical User Interface (GUI) allowing a user to interact with the device. It is common to use such electronic devices on their own, i.e., with the built-in display screen, but due to limitations in the display size it is also common to employ them in combination with other, in particular larger, display solutions, for instance by way of an external monitor, a television screen, a projector or the like.

Various input options are available to interface with the user, which are usually based on physical input devices. These physical input devices may be built-in, such as physical buttons, a keyboard, volume button(s), on-off button(s), or may be external physical input devices, such as a computer mouse, an input stylus, a trackpad, a trackball, a joystick, or the like. The mentioned physical input devices have in common that they are essentially used by a user's hand or hands.

However, external physical input devices have several drawbacks. They must be carried with the electronic device when travelling and may be easily forgotten or get lost. They can make the electronic device less portable and convenient to carry around, as they may require additional cables, power adapters, and space. They may require their own power source, which means the user needs to carry around an additional power adapter or rely on a nearby electrical outlet. They may require maintenance, such as cleaning or replacing batteries, which can add additional time and effort to the user's workflow. Adding too many external physical input devices can lead to a cluttered workspace, which can be distracting and make it harder to work efficiently.

One attempt to overcome the drawbacks of external physical input devices is based on the concept of a Touch User Interface (TUI). For example, a touchscreen may be used which allows the user to interact with content displayed on the screen by physically touching the screen with a fingertip, thereby replacing an external computer mouse.

However, also touchscreens have several drawbacks. Touchscreens are prone to collecting fingerprints and smudges. Apart from hygienic concerns, this can be unsightly and make it difficult to see the contents on the screen. Touchscreens may not always accurately detect the user's touch, especially if the user has large or small fingers or is wearing gloves. Touchscreens can be more expensive than traditional screens, which can increase the overall cost of a device. Using a touchscreen can consume more battery power than using a traditional screen, as the screen needs to be constantly powered to detect the user's touch. Using a touchscreen can require the user to hold their arm in an uncomfortable position for extended periods of time, which can lead to fatigue and discomfort. Touchscreens may not be suitable for certain tasks, such as typing or precise drawing, which can require more precise input methods.

Moreover, when the user is inputting text using a built-in or external keyboard, the user's hands may be required to switch back and forth repeatedly between a typing posture and another posture in which other computer functions can be carried out, for example operating a pointer on the display. For example, the user may use an external physical computer mouse, a trackpad, or a built-in touchpad or trackpoint to control a mouse pointer or other user interface pointer on the screen. As another example, the user may use a touch-enabled display to control the pointer by directly touching the screen.

But repeated switching between operating postures, especially between the above-described typing posture and pointer control posture, has several drawbacks. First of all, constantly switching between postures can be tiring, especially if done frequently throughout the day. Switching between postures can also be uncomfortable, distracting and may interrupt the user's workflow, as they need to take their focus away from the work to adjust the posture. This can slow down the user's workflow and reduce productivity, as the user needs to take extra time to adjust the position each time they switch. Switching between postures can also increase the risk of developing repetitive strain injuries, such as carpal tunnel syndrome or tendinitis. Moreover, switching between postures can reduce accuracy, especially if the user needs to switch quickly or frequently. This can be particularly problematic if the user is working on tasks that require a high degree of precision, such as graphic design or coding. Apart from that, switching between postures can limit the user's workspace, as they may need to move the keyboard and mouse around to accommodate changing postures. Switching between postures can also be mentally taxing and reduce the user's ability to focus, especially if they need to switch frequently.

US 2014/201685 A1 discloses a method that allows a computing device to determine a user input. The method includes detecting one or more user input objects in a 3-dimensional field relative to a 2-dimensional surface, determining coordinates for the one or more user input objects relative to the 2-dimensional surface, and determining a user input based on the coordinates.

US 2014/139430 A1 discloses a virtual touch method applied to a computer provided with a camera. The method includes defining a virtual touch plane in the space in front of the screen of the computer, capturing a reference fingertip image of a finger touching the virtual touch plane by the camera and storing the reference fingertip image, capturing an operation fingertip image of the finger in a touch operation by the camera, and comparing the sizes of the reference fingertip image and the operation fingertip image to determine whether the finger touches or pierces through the virtual touch plane.

In view of the above, there is a need to provide improved user interface techniques, especially in terms of efficiency and ergonomic factor.

It is therefore a technical problem underlying the present invention to provide an improved user interface for controlling electronic devices, thereby overcoming the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

In one aspect of the invention, a method for touchless control of an electronic device, in particular a computer device, is provided. The method may be computer-implemented. The electronic device, in particular computer device, may comprise and/or may be communicatively coupled to display means, and/or sensor means and/or an optional keyboard. The keyboard may be a physical keyboard, which may be integrated into the electronic device, in particular computer device or which may be an external periphery device of the electronic device, in particular computer device, or a virtual keyboard, e.g., generated on a projection surface using projection means. The sensor means may be configured for observing an interaction space. The interaction space may be arranged at least partially above an interaction surface. The interaction surface may comprise a surface of the keyboard, a tabletop, in particular a tabletop on which the electronic device, in particular computer device, is arranged, and/or a lap of a user, in particular a user of the electronic device, in particular computer device. The method may comprise determining, based at least partially on sensor data captured using the sensor means, a movement of at least one finger, preferably of the fingertip of the at least one finger, of the user. The determining may take place while the user's hands are arranged at least partially above the interaction surface, such as above the keyboard surface. The method may comprise generating at least one control command. The generating may be performed in response to the determining. The at least one control command may be configured for manipulating content displayed on the display means in accordance with the movement of the at least one finger.

Accordingly, content displayed on the display means can be manipulated by the user by moving the at least one finger, in particular the fingertip thereof. This way, the computer device can be efficiently controlled. The manipulation of the content and thus the controlling of the computer device is touchless, i.e., it takes place while the at least one finger is distanced from the display means and/or does not touch the display means. This is not only beneficial in terms of hygiene but may also be more convenient than touch-based interfaces, as the user can control the device without having to reach the hand or arm out to touch the display.

Furthermore, because the movement of the at least one finger takes place while the user's hands are arranged at least partially above the interaction surface, e.g., the keyboard surface and/or within the interaction space, the user can quickly, efficiently and ergonomically switch between a first posture, e.g., a typing posture in which the user's hands are performing user inputs on the keyboard, and a gesture input posture in which the user's at least one finger is moving to trigger control commands for manipulating content displayed on the display means. Especially in terms of efficiency, the disclosed approach can provide an improvement by allowing the user to perform tasks that require pointing and other activities, such as typing, without having to pause and readjust the user's posture. This can also help prevent discomfort and fatigue and can even reduce the risk of developing repetitive strain injuries. Due to the reduced movement needs between pointing postures and other postures, such as typing, increased user productivity is facilitated by allowing the user to perform tasks more efficiently and accurately. This can greatly improve the user experience by allowing the user to interact with the computer device in a way that feels natural and comfortable, and by reducing the need for frequent pauses and adjustments. Overall, a particularly efficient and ergonomic operation of the human-machine interface and thus of the computer device becomes possible.

An electronic device may be understood as a tool or apparatus that relies on electronic components to operate. In this context, an electronic component is any part that uses electrical signals to perform a specific function. A computer device is one type of electronic device, in particular being an electronic device that is specifically designed to execute various computing tasks.

Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

A user may interact with said electronic device, in particular with said computer device, using one or more physical input devices, examples of which are provided further below.

A physical input device may be any device that allows a user to input data and/or commands into a computer device or other electronic device. Physical input devices may come in a wide variety of forms for various purposes and use cases. Some examples of a physical input device include a computer mouse, a keyboard, a touchpad, a trackpad, a trackpoint, a joystick, a gaming console controller, a remote control and a touchscreen. Keyboards are typically used to input text and/or commands into a computer device or electronic device. A keyboard may be built-in in the electronic device, particularly computer device, may be an external physical keyboard or may be a virtual keyboard provided, e.g., by way of a projection onto a surface. Computer mice and touchpads are regularly used to move a mouse pointer on a screen and select items, while joysticks are used for gaming and other applications that require precise control.

The term display means includes any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The term touchless should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required.

The term user interaction may be understood to include any user input provided by a user person. The user may provide said user input with the intention to cause the electronic device to perform an action and/or to control the electronic device.

The term sensor means may include one or more sensor devices. Groups of the one or more sensor devices may build a sensor array. Thus, an exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total.

The sensor means may in particular be 3D imaging sensor means which include sensor devices that are, alone or in combination with other sensor devices, capable of capturing three-dimensional images of an environment, in particular of objects such as a user's hand. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The term interaction space may be understood as comprising or being a 3D space in the nearfield of the electronic device in which the user may provide touchless user input. Alternatively or additionally, the term interaction space may be understood as a space within which user interaction is captured. The space may be a space between the user and the electronic device, e.g., when the user faces a display means of the electronic device, the space being located between the user's face and the display means. Generally, the interaction space may be within or equal to the field of view of the sensor means. The interaction space may have a spatial orientation and/or location that is particularly convenient for the user person for providing touchless user input. It may be provided that the user person is provided with a control option to adjust the spatial orientation and/or location of the interaction space.

As already mentioned further above, the interaction space may be arranged a least partially above the keyboard. More precisely, the arrangement may be above a keyboard surface of the keyboard. The interaction space may capture the entire area above the keyboard surface, or it may capture only a relevant portion thereof, or it may even capture an area greater than the keyboard surface. Accordingly, the interaction space captures at least part of the space in which the user's hands are normally placed when performing a typing activity.

The term sensor data may be understood to include data collected by the sensor means, in particular captured by the sensor means. The sensor means preferably includes at least one imaging sensor device, as mentioned above, thus in this case, the sensor data includes image data. In a preferred embodiment, the sensor means is configured to capture a 3D image of the environment in the nearfield of the electronic device. The 3D image may be generated based on layering various sensor data from different sensor devices. In particular, the sensor means may include a depth sensor, such as at least one infrared sensor, facilitating creation of the 3D image. Said captured sensor data may be processed by the electronic device, in particular by a processing unit of the electronic device, in order to generate control commands corresponding to the user input lying in the sensor data.

In one aspect of the present invention, the step of manipulating content displayed on the display means comprises moving at least one pointer in accordance with the movement of the at least one finger. Accordingly, user interface elements, such as buttons, text boxes, scrollbars and the like, can be precisely, efficiently and comfortably reached by the user using the movement of the at least one finger which causes a corresponding movement of the at least one pointer. The user interface pointer may comprise a graphical representation.

The at least one pointer may comprise a mouse pointer. The graphical representation may comprise an arrow, a hand, or the like, which may be animated. In general, the graphical representation of the mouse pointer may comprise any graphical shape and/or behavior which the skilled person is familiar with in connection with mouse pointers. Accordingly, the user can efficiently switch between a typing mode in which the user enters text with the keyboard and a gesture mode, which in this case is a mouse mode in which the user controls the mouse pointer. As a non-limiting example, the user may select formatting settings of the typed text or perform any function of a text processing application in-between typing activities.

The at least one pointer may comprise a user interface pointer. The graphical representation may comprise a circle, which may optionally be animated. Accordingly, the user can efficiently switch between a typing mode in which the user enters text with the keyboard and a gesture mode, which may be similar to the mouse mode mentioned above except for the graphical representation of the pointer.

The at least one pointer may comprise a text input cursor. The graphical representation may comprise a vertical line, such as "|", also called a "caret" which may be animated. In general, the graphical representation of the text input pointer may comprise any graphical shape and/or behavior which the skilled person is familiar with in connection with text input pointers. Accordingly, the user can efficiently switch between a typing mode in which the user enters text with the keyboard and a gesture mode, which in this case is a text input cursor mode in which the user controls the text input cursor. As non-limiting examples, the user may move the cursor somewhere else, for example to continue adding text in another location of a document, and/or may select a text portion, for example to delete the text portion or to apply formatting options and/or may perform any function of a text processing application in-between typing activities.

In one aspect of the present invention, moving the mouse pointer or the user interface pointer is performed in accordance with a first finger of the user and/or moving the text input cursor is performed in accordance with a second finger of the user. Optionally, the first finger may be a right index finger of the user and/or the second finger may be a left index finger of the user or a different user, or vice-versa. Accordingly, a unique user interface concept is provided in which the user can efficiently switch between a typing mode in which the user enters text with the keyboard and two gesture modes, namely a mouse mode operated by one of the user's fingers and a text input cursor mode operated by another one of the user's fingers.

It shall be noted that the combination of the two modes mentioned above, i.e., mouse mode and text input cursor mode, is only one possibility. Generally, aspects of the invention may support different or additional modes, and even any number of modes. For example, three, four, five, six, seven, eight, nine or ten modes may be provided, each associated with one or more user interface actions which can be performed in accordance with one of the fingers of the user. Furthermore, modes may be provided which are associated with a plurality of fingers. As a non-limiting example, the user may move two fingers, such as an index finger and a middle finger, in a coordinated manner to cause a swipe event within the content displayed on the display means. This way, even more than ten modes may be provided.

In one aspect of the present invention, the method comprises generating a click command in response to a user action. The user action may comprise a pre-defined user action.

The user action may comprise a pre-defined gesture using (only) the at least one finger which is used to control the at least one pointer. For example, the gesture may comprise a straightening of the at least one finger, a snapping of the at least one finger in the general direction of the display means, a bending of the at least one finger, similar to a "pistol trigger" movement, and/or any other gesture of the at least one finger which is suitable for indicating a click event.

The user action may comprise a pre-defined gesture using the at least one finger which is used to control the at least one pointer and at least one other finger and/or portion of the same hand. For example, the gesture may comprise the user moving and/or snapping the tip of the thumb towards the index finger.

The user action may comprise a pre-defined gesture using the at least one finger which is used to control the at least one pointer and at least one other finger and/or portion of the other hand of the user.

The user action may comprise a pre-defined gesture in which the user moves the at least one pointer over at least one user interface element onto which the click command should be applied and causes the at least one pointer to remain, i.e. hover, over the at least one user interface element for a predetermined threshold time, after which the click command is generated. This way to generate a click command may be particularly comfortable and efficient especially in-between typing activities, i.e., when the user's hands are arranged essentially in a typing pose, because in such a pose the range of motion of the finger in the general direction of the display means may be limited.

In one aspect of the present invention, the user action which causes the generating of the at least one click command may comprise a user action which is independent of the movement of the at least one finger used for generating at least one control command configured for manipulating content displayed on the display means. The user action may be independent of a movement of a hand associated with the at least one finger. Accordingly, the at least one finger is used primarily or exclusively for manipulating the displayed content, such as moving the at least one pointer, while the at least one click command is caused by a user action which does not involve the at least one finger, or even the corresponding hand of the user. This may provide for a particularly precise pointing activity or other content manipulation activity of the user.

In one aspect of the present invention, the user action which causes the generating of the at least one click command may comprise using at least one input element. The at least one input element may comprise one or more of the following characteristics: It may be arranged on and/or near the keyboard. It may be arranged essentially in and/or near the keyboard plane. It may be arranged at and/or near a proximal edge of the keyboard, i.e., and edge of the keyboard which faces towards the user in normal use, as compared to a distal edge which faces away from the user and/or towards the display means in normal use. It may be arranged in an area that is accessible with a user's finger, preferably with a user's thumb, while the user's hands are placed essentially in a typing position. It may be arranged next to, in particular proximal to, a space bar of the keyboard. It may be an input element associated with a trackpoint of the keyboard. It may be an input element associated with a trackpad associated with the computer device. It may comprise a button or key, wherein the user action may comprise pushing the input element. It may comprise a touch-sensitive input element, wherein the user action may comprise touching the input element.

In one aspect of the present invention, manipulating content displayed on the display means may comprise one or more of: scrolling or swiping content in accordance with a movement of at least one finger; deleting content, such as a most recently typed text portion, word or character, in accordance with a movement, such as a leftward movement, of at least one finger; selecting a next input area in a form in accordance with a movement, such as a downward movement, of at least one finger; performing a keyboard shortcut in accordance with a movement of at least one finger, in particular in accordance with a pre-defined gesture performed with at least one finger. Accordingly, various types of gestures and corresponding actions, such as keyboard shortcuts, the skilled person is familiar with may be supported.

In one aspect of the present invention, different types of manipulating content displayed on the display means may be discriminated based on one or more of: at least one characteristic of the at least one finger and/or movement of the finger; a velocity of the movement of the at least one finger; an acceleration of the movement of the at least one finger; a sequence of movements of the at least one finger; a gesture performed with the at least one finger; a posture of the at least one finger relative to other fingers; a bending of the at least one finger. In one aspect of the present invention, a position of the at least one finger may be translated, into a position of the at least one pointer on the display means. The translation may be based at least partially on a translation function which translates the position and/or movement of the at least one finger onto a corresponding position and/or movement of the at least one pointer. The translation function may translate a movement range of the at least one finger into a movement range of the at least one pointer, and/or may take into account a display size of the at least one display. Accordingly, in this aspect the at least one pointer essentially follows the at least one finger, similar to the use of a physical computer mouse or trackpad.

In one aspect of the present invention, a position and/or movement and/or movement velocity and/or movement acceleration of the at least one finger relative to a reference position may be translated into a position and/or movement and/or movement velocity and/or movement acceleration of the at least one pointer. The reference position may be a center point of the display means or a position corresponding to a neutral posture of the at least one finger. Optionally, the movement and/or the movement velocity and/or the movement acceleration of the at least one pointer may be based on, e.g., may be proportional to, a distance between the position of the at least one finger and the reference position and/or a finger velocity and/or a finger acceleration. Accordingly, in this aspect the at least one pointer may not directly follow the at least one finger, but may be moved similar to the use of a joystick. In other words, when the at least one finger moves away from a neutral position, this may cause a corresponding movement of the at least one pointer. The at least one pointer may continue moving in the current direction as long as the at least one finger remains spaced apart from the reference position. The at least one pointer may stop moving when the at least one finger moves back to the reference position. This aspect may provide an improved user experience in view of the limited movement capacity of the at least one finger when the user's hands are arranged essentially in a typing position, with the at least one finger pointing out of the typing position. Accordingly, the at least one finger may stay more or less at the same place and does not need to move around the whole screen size.

In one aspect of the present invention, when the at least one finger moves away from the reference position, this may cause a movement of the at least one pointer with a predetermined movement velocity. The movement velocity of the at least one pointer may depend on the distance between the at least one finger and the reference position. In particular, the movement velocity of the at least one pointer may increase with the distance between the at least one finger and the reference position. The increase may be based on a predetermined function.

In one aspect of the present invention, when the at least one finger moves back towards the reference position, this may cause a movement of the at least one finger in a direction opposite to the previous direction. This may be done with a movement velocity of the at least one pointer which is smaller than the previous movement velocity of the at least one pointer in the previous direction.

In one aspect of the present invention, the movement of the at least one finger may take place essentially in a finger movement plane. The finger movement plane may comprise or define an x-axis and a y-axis. A movement of the at least one pointer may be based on the movement of the at least one finger essentially in the finger movement plane. Accordingly, a movement of the at least one finger in an x- and/or y-direction may cause a movement of the at least one pointer on a display surface, preferably also in an x- and/or y-direction.

In one aspect of the present invention, a movement of the at least one finger in a z-direction relative to the finger movement plane, i.e., out of the finger movement plane and/or essentially perpendicular to the finger movement plane, may be disregarded for causing a movement of the at least one pointer.

In one aspect of the present invention, the finger movement plane may be arranged essentially in parallel to a display surface of the display means, or produced by the display means. This way, a relatively direct mapping of finger movements on pointer movements on the display may be provided. However, depending on the relative location of the at least one finger and the display means, it may be less convenient for the user to perform an exact pointing action.

In one aspect of the present invention, the finger movement plane may be arranged essentially perpendicular to a keyboard surface of the keyboard. This way, when the user's hands are arranged near the keyboard, the user may intuitively point towards the display means, which may be particularly convenient when the display means is arranged near the keyboard, such as when the computer device comprises a laptop.

In one aspect of the present invention, the finger movement plane may be arranged essentially perpendicular to a pointing direction of the at least one finger. This way, the user may have more freedom in holding the at least one finger, in particular it is not necessary that the user arranges the at least one finger in a fixed orientation to the display means and/or keyboard. Instead, the user may just raise the at least one finger slightly above the keyboard surface and may perform a movement of the at least one finger which will influence the pointer position although the user does not directly point at the display means. This may provide a particularly convenient and efficient user experience.

In one aspect of the present invention, the steps of determining a movement of at least one finger and generating at least one control command configured for manipulating content displayed on the display means may be performed upon entering a gesture more in response to detecting a gesture mode activation event. The gesture mode activation event may be based at least partially on a behavior of the at least one finger and/or a hand of the user, and/or may be based at least partially on a user input using an input element, such as the input element mentioned elsewhere in the present disclosure.

It may be provided that the method further comprises switching, upon detecting a trigger event, in particular performed by the user, into a gesture interaction mode configured to detect free space gestures. The trigger event may be predetermined and/or adjustable by the user. The method may comprise generating, in the gesture interaction mode, at least one control command based on the at least one characteristic of the user's hand, preferably based on movement and motion of the user's hand within the interaction space. The at least one control command may cause the computer device to perform actions associated with the detected free space gestures. The method may comprise switching back to the other mode(s) disclosed herein upon a trigger event or automatically after expiry of a period of time in which no free space gesture was detected. The period of time may be predetermined and/or adjustable by the user.

A trigger event is any generally any event that causes the electronic device, in particular the computer device, to switch from one mode to another. These events may be initiated by the user and/or by the electronic device itself. In the context of gesture interaction, a trigger event could be anything from the user waving their hand in front of the electronic device, to a sound or a motion being detected by the electronic device. The trigger event essentially prompts the electronic device to switch into the gesture interaction mode. This mode is configured to detect free space gestures, which means that the user can interact with the electronic device without the need for any physical contact. Free space gestures can include anything from waving, swiping, and tapping, to more complex gestures like pinching, twisting, and rotating. The sensor means may detect the trigger event. Further, the sensor means may work together with other peripheral devices.

Free space gesture interaction significantly widens up the use cases of the present invention. For example, it can be used in gaming to provide a more immersive experience, or in digital writing while detecting a writing gesture.

The trigger event being adjustable by the user has several advantages over a predetermined trigger event. Firstly, it may improve the user experience by allowing users to personalize the electronic device to their own preferences. For example, a user may prefer to use a specific hand gesture as the trigger event, rather than a predefined gesture. By allowing users to adjust the trigger event, they can choose a gesture that is more natural or comfortable for them, which can make the interaction with the system feel more intuitive. Secondly, adjustable trigger events can also improve accessibility for users with different physical abilities or disabilities. For example, users with limited mobility or dexterity may find it easier to perform certain gestures than others. By allowing them to adjust the trigger event, they can choose a gesture that is more comfortable or feasible for them to perform, which can make the system more accessible. Thirdly, adjustable trigger events can also improve the usability of the system in different contexts or environments. For example, in a noisy environment, a user may prefer to use a trigger event that does not involve a sound or a vocal command, but a hand gesture, or vice versa for quiet environments. Thus, by allowing users to adjust the trigger event, users can choose a trigger event that is more appropriate for the context they are in.

Switching back and forth between modes upon a trigger event or automatically after expiry of a period of time in which no free space gesture was detected is particularly advantageous for a smooth and reliable user experience. Usually, when interacting with a computer device, the usage of a mouse is the main way of interaction. All other interaction possibilities, except the usage of a keyboard, are often seen as temporal or even optional. For example, a laptop being equipped with a touchscreen may be controlled via the touchscreen but in most of the times, the user will stick to interact using the mouse and/or touchpad and the keyboard instead of the touchscreen. Thus, the mouse plays a key role in user interaction and user experience. As a result, for the present invention, it is very advantageous if switching back to a mouse mode is performed in an easy, reliable and intuitive manner.

It may be provided that the method comprises recording, using a microphone, voice input of the user person and generating at least one voice-based control command. Said at least one voice-based control command may be related to the emulation of at least one mouse-functionality and/or gesture interaction, and/or the at least one voice-based control command may be supplementary commands facilitating further functionalities of the computer device if combinedly detected with the at least one characteristic, preferably position, movement and motion, of the user's hand.

Voice-based control offers its own unique set of advantages. On the one hand, it allows users to control devices without having to physically move their body or parts of their body at all. This can be particularly useful for people with disabilities or those who have limited mobility. On the other hand, voice-based control also allows for hands-free operation, which can be particularly useful in situations where users need to multitask or have their hands occupied, such as when cooking or working out.

When used together, touchless gesture control and voice-based control can be complementary to each other. For example, users can use voice-based commands to turn on an electronic device or select an option, and then use touchless gestures to fine-tune their selection or make more precise adjustments. This can provide a more seamless and natural user experience providing an extended set of functionalities.

It may be provided that the sensor means at least includes two cameras of the same type, preferably two 2D-cameras, more preferably two infrared cameras, having an overlapping field of view and preferably being arranged spaced apart from each other. The sensor means may further include an infrared laser projector projecting an infrared laser pattern configured to support the sensor means to capture sensor data, in particular depth information. At least one of the cameras may be oriented to have a field of view being oriented essentially downwards, in particular with respect to the direction of gravity.

In order to create a 3D image of the environment of the electronic device, several options are available, as described above. The term 3D image may, in this sense, be understood broadly, i.e., including any data set which describes a 3D environment. The sensor means may comprise one or more sensor arrays, each sensor array being configured to observe one essential direction of view, e.g., left side and right side of the electronic device during usage by a user facing the electronic device.

In a first example, which may be a stereovision approach, one sensor array may include two infrared cameras. By overlapping and/or mapping the captures sensor data of the two infrared cameras, a 3D image of the environment may be created.

In a second example, which may be a stereovision approach, one sensor array may include two infrared cameras and one infrared projector configured to project an infrared laser pattern. Compared to the first example, the second example has a higher precision due to the infrared laser pattern that is captured by at least one, preferably both, of the infrared cameras.

In a third example, which may be a stereovision approach, one sensor array may include two 2D cameras, e.g., being a standard RGB-camera. By overlapping and/or mapping the captures sensor data of the two infrared cameras, a 3D image of the environment may be created. Compared to the first example, the precision in detecting objects, such as the user's hand, is higher because color information may be used to determine objects. This becomes particularly advantageous if locking of the user's hand, as described above, is provided: The color information may be used, on the one hand, to determine one or more reference point(s) that are unique to the user's hand. On the other hand, a confusion with other objects is avoided more reliably due to the fact that color information may be considered. In a particular embodiment where locking of the user's hand is provided, the color information may be even used instead of a reference point, thus defining the unique color of the user's hand to be the reference for locking the user's hand.

In a fourth example, which may be a stereovision approach, one sensor array may include two 2D cameras, e.g., being a standard RGB-camera, and one projector configured to project a laser pattern. Compared to the third example, the fourth example has a higher precision due to the laser pattern that is captured at least one of the cameras.

In a fifth example, which may be a structured light approach, one sensor array may include one infrared camera and one infrared laser projector configured to project an infrared laser pattern. A 3D image of the environment may be created solely based on sensor data captured by the one infrared camera by taking into account distortions of the infrared laser pattern by the shape of the environment and/or objects in the environment.

In a sixth example, which may be a time-of-flight approach, one sensor array may include a ToF-sensor configured to capture a precise 3D image of the environment based on measurement of time-of-flight of emitted light, as described above.

The sensor means, in a preferred embodiment of the present invention, comprises at least two sensor arrays, wherein one sensor array is arranged in an upper left corner of a display means of a computer device, and one sensor array is arranged in an upper right corner of said display means. The sensor array arranged in the upper left corner may have a field of view essentially oriented to the right, while the sensor array arranged in the upper right corner may have a field of view essentially oriented to the left. In other words: The sensor arrays may each have a field of view essentially diagonally extending over the display means. A more detailed description is provided as follows:
It may be provided that the computer device comprises a display means being configured to display a scene to the user. The sensor means may include at least one, preferably two, sensor device(s), wherein at least one of the at least one sensor device(s) having a field of view extending at least partly across to the display means from a left side to a right side and/or vice versa with respect to at least one orientation of the display means during usage;
   and/or
the sensor means may include at least one, preferably two, sensor device(s), wherein at least one of the at least one sensor device(s) is oriented having a field of view covering at least part of a spatial area in front of the display means, preferably the spatial area being located between the user and the display means;
   and/or
the sensor means may be arranged at or integrated in an edge area of the display means, the sensor means including at least one, preferably two, sensor device(s), wherein at least one of the at least one sensor device(s) is oriented having a field of view covering an opposing part of the display frame.

Said arrangement(s) of sensor means is particularly advantageous for two main reasons. On the one hand, by having a field of view extending at least partly across to the display means from a left side to a right side and/or vice versa with respect to at least one orientation of the display means during usage, the respective fields of view are particularly large, e.g., also covering a space in front of the display means and/or above a surface of a keyboard. This enables observing a large interaction space increasing the variety of options for the user to interact. In particular, the user may interact emulating mouse functionalities, as described above, but also by performing free space gestures, as described above.

On the other hand, the precision and/or quality of captured sensor data when capturing a user's hand while mimicking usage of a computer mouse is increased due to the fact that the sensor means, in particular if a stereovision sensor means is used, may have a minimum distance in which captured sensor data are of less precision. Based on the above-described sensor arrangement, a distance between the sensor means and the observed user's hand is always kept during usage. This distance may ideally be larger than said minimum distance.

In one aspect of the present invention, a data processing apparatus, preferably an electronic device, more preferably a computer device, is provided comprising means for carrying out a method according to any of the aspects of the present invention disclosed herein.

All technical implementation details and advantages described with respect to the first aspect of the present invention are self-evidently mutatis mutandis applicable for the second aspect of the present invention and vice versa.

In one aspect of the present invention, a system is provided. The system may comprise an electronic device, preferably a computer device, configured to receive and process sensor data. The system may comprise sensor means, preferably including at least one sensor device. The sensor means may be configured for observing an interaction space arranged at least partially above an interaction surface, such as a surface of a keyboard associated with the electronic device, preferably computer device, a tabletop and/or a lap of a user. The electronic device, preferably computer device, may comprise and/or may be communicatively coupled to the sensor means. The electronic device, preferably a computer device, may be configured for performing any of the aspects of the present invention disclosed herein.

The electronic device, preferably a computer device, may comprise one or more of a processor, a non-transitory memory and/or a display means. The electronic device, preferably a computer device, may comprise and/or may be communicatively coupled to a microphone. The electronic device, preferably computer device, may comprise and/or be communicatively coupled to a keyboard. The electronic device, preferably a computer device, may comprise a folding mechanism. This enhances the durability and robustness of the electronic device, preferably a computer device. The electronic device, preferably a computer device, may comprise and/or may be communicatively coupled to a keyboard. The electronic device, preferably a computer device, may comprise a housing having integrated therein the sensor means.

The sensor means may comprise at least two sensor devices, the at least two sensor devices being cameras of the same type, preferably two 2D-cameras, more preferably two infrared cameras, having an overlapping field of view and preferably being arranged spaced apart from each other, wherein at least one, preferably each, of the sensor devices is oriented to have a field of view being oriented essentially towards a bottom part of a display means of the computer device.

The electronic device, preferably a computer device, may comprise and/or may be communicatively coupled to an infrared laser projector configured to project an infrared laser pattern which is capturable by an infrared camera.

The system may be configured to perform a method according to the first aspect of the present invention.

All technical implementation details and advantages described with respect to the first and second aspects of the present invention are self-evidently mutatis mutandis applicable for the third aspect of the present invention and vice versa.

In one aspect of the present invention, a sensor means, preferably including at least one sensor device, more preferably including at least two sensor devices, may be provided configured for use in a method according to the first aspect of the present invention and/or in a system according to the third aspect of the present invention.

All technical implementation details and advantages described with respect to the first, second and third aspects of the present invention are self-evidently mutatis mutandis applicable for the fourth aspect of the present invention and vice versa.

In one aspect of the present invention, the use of a sensor means, preferably according to claim the fourth aspect of the present invention, is provided, in particular in a method according to the first aspect of the present invention.

All technical implementation details and advantages described with respect to the first, second, third and fourth aspects of the present invention are self-evidently mutatis mutandis applicable for the fifth aspect of the present invention and vice versa.

In one aspect of the present invention, a computer program or a computer-readable medium may be provided, having stored thereon a computer program, the computer program comprising instructions which, when the program is executed by a computer, cause the computer to carry out a method according to the first aspect of the present invention.

All technical implementation details and advantages described with respect to the first, second, third, fourth and fifth aspects of the present invention are self-evidently mutatis mutandis applicable for the sixth aspect of the present invention and vice versa.

### BRIEF DESCRIPTION OF THE DRAWINGS

The disclosure may be better understood by reference to the following drawings:

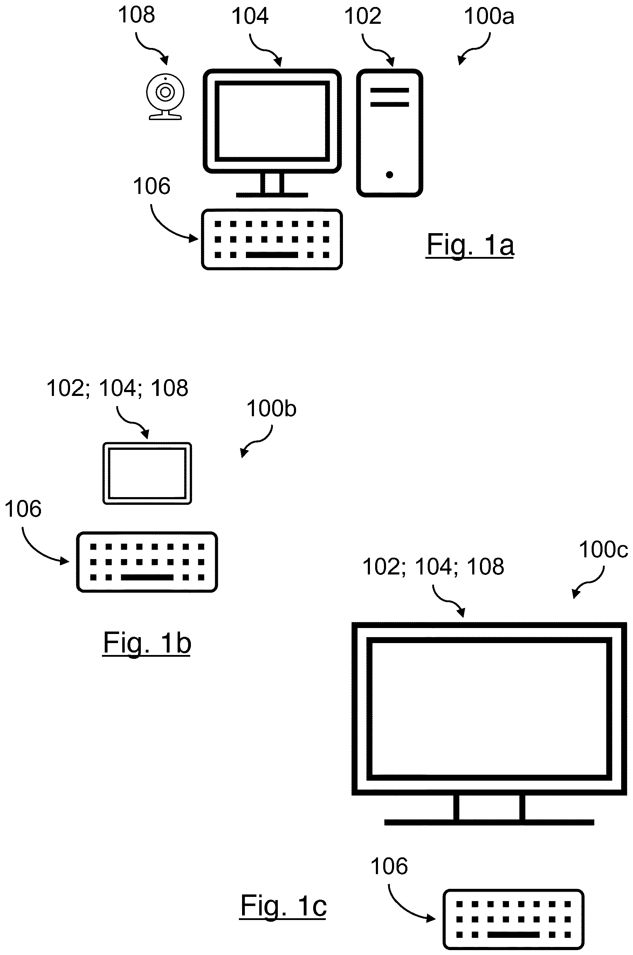

- Fig. 1a:: A computer device in accordance with a first exemplary embodiment of the invention.
- Fig. 1b:: A computer device in accordance with a second exemplary embodiment of the invention.
- Fig. 1 c:: A computer device in accordance with a third exemplary embodiment of the invention.
- Fig. 1d:: An interaction space arranged above a keyboard surface of a computer device in accordance with embodiments of the invention.
- Fig. 2a:: A top view of a user using a computer device in accordance with embodiments of the invention.
- Fig. 2b:: A top view of a user using a computer device with an input element in accordance with embodiments of the invention.
- Fig. 3:: A side view of a user using a computer device in a typing position in accordance with embodiments of the invention.
- Fig. 4a:: A side view of a user using a computer device in a first gesture control position in accordance with embodiments of the invention.
- Fig. 4b:: A side view of a user using a computer device in a second gesture control position in accordance with embodiments of the invention.
- Fig. 4c:: A side view of a user using a computer device in a third gesture control position in accordance with embodiments of the invention.
- Fig. 5:: A flowchart of a method in accordance with embodiments of the invention.

### DETAILED DESCRIPTION

In the following, exemplary embodiments of computer devices in which aspects of the present invention may be practiced will be explained with reference to Figs. 1a-c.

Fig. 1a illustrates an embodiment 100a in which the computer device 102 is a personal computer. The computer 102 is coupled to a display means 104 in the form of a computer monitor, to a keyboard 106 and to sensor means 108.

Fig. 1b illustrates an embodiment 100b. Embodiment 100b differs from embodiment 100a in that the computer device 102 is a tablet with integrated display means 104 and sensor means 108.

Fig. 1c illustrates an embodiment 100c in which the computer device 102 is integrated into a television set which also comprises the display means 104 and the sensor means 108.

It shall be mentioned that the concepts disclosed herein may also be practiced in other embodiments in various configurations, e.g., with integrated or external display means 104, keyboards 106 and/or sensor means 108.

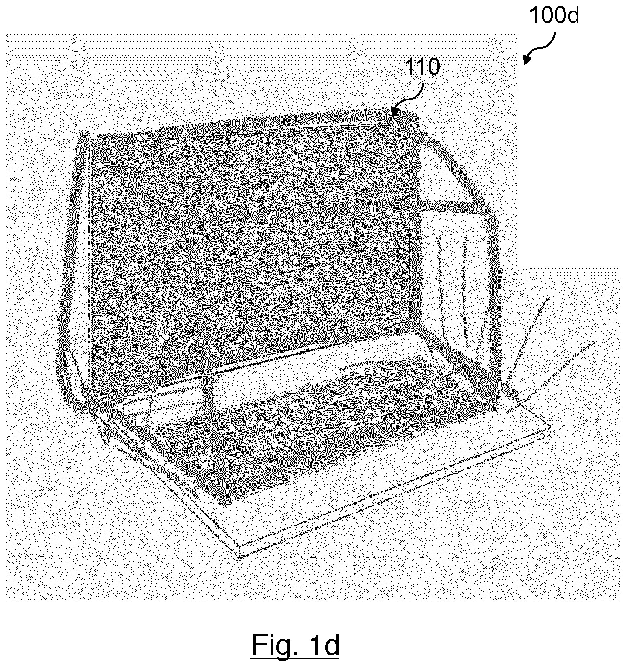

Fig. 1d illustrates a conceptual view 100d of an interaction area 110. As can be seen, the interaction area 110 is essentially arranged above a keyboard 106, more precisely above a keyboard surface thereof. The interaction space 110 is a space which is observed by the sensor means 108. This way, movements within the interaction space 110 can be determined and used in aspects of the invention.

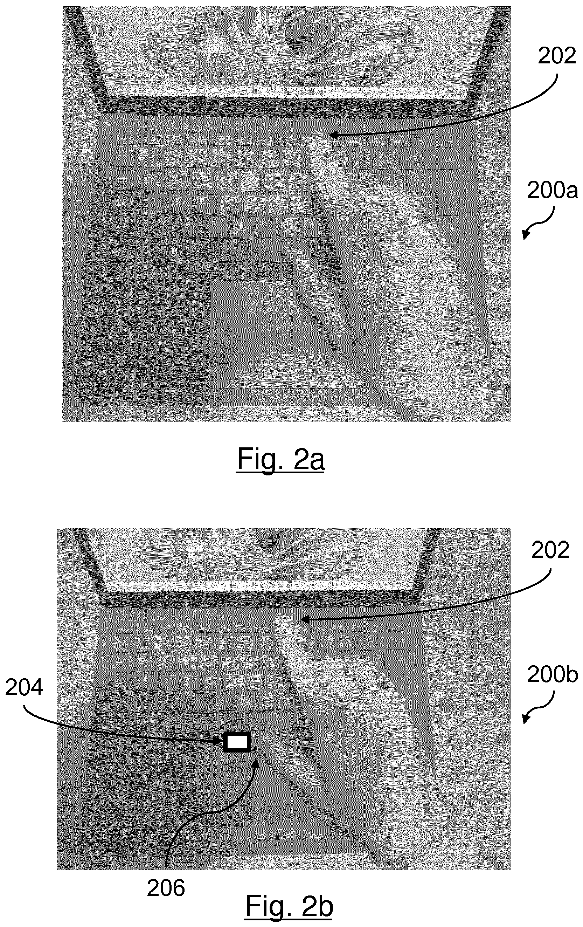

Fig. 2a illustrates a top view 200a of a user using a computer device 102 in accordance with embodiments of the invention. As can be seen, the user has a hand placed above the keyboard 106, as is conventional when the user is typing. In the situation shown in Fig. 2a, the user points a finger 202 essentially towards the display means 104, i.e. in the general direction of the display means 104. The movement of the finger 202 can be observed by the sensor means 108 and a pointer, such as a mouse pointer, can be moved correspondingly on the displayed content. This way, the user can control the computer device 102 with touchless pointing gestures. Because the interaction space 110 is arranged essentially above the keyboard 106, the user can carry out the pointing activities particularly efficiently in-between typing activities with minimal movement of the user's hand(s) and with minimal readjustment of the hand position.

Fig. 2b illustrates a top view 200a which essentially corresponds to that of Fig. 2a. Fig. 2b in addition shows an input element 204 which can be used by the user to generate a click command. In the illustrated embodiment, the input element 204 is ergonomically placed proximal to the keyboard 106 so that it can be efficiently operated by the user's thumb 206.

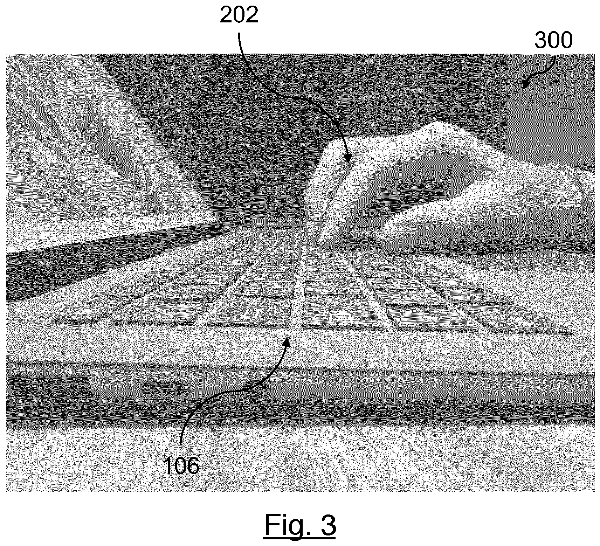

Fig. 3 illustrates a side view 300 of a user using a computer device 102 in a typing position in accordance with embodiments of the invention. Accordingly, the finger 202 is placed on the keyboard 106, as is conventional during typing.

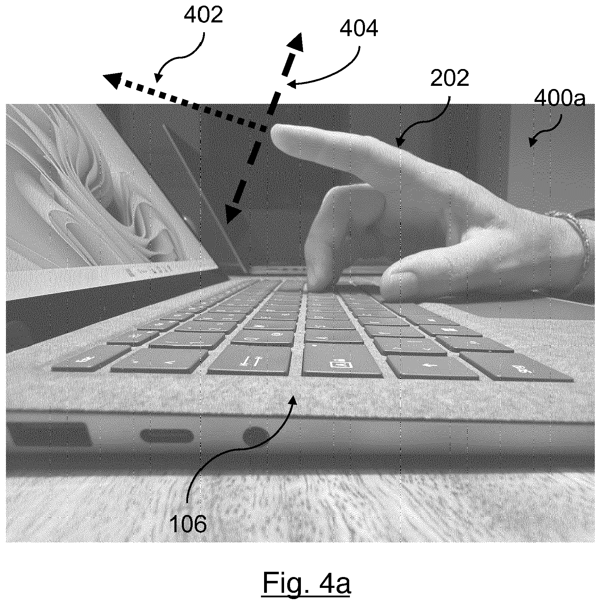

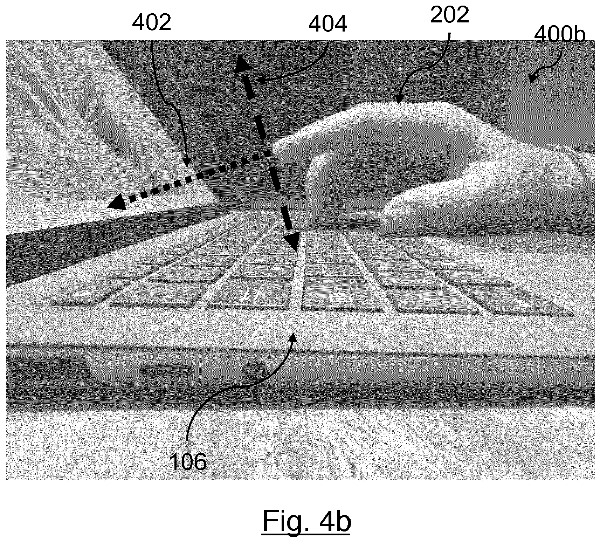

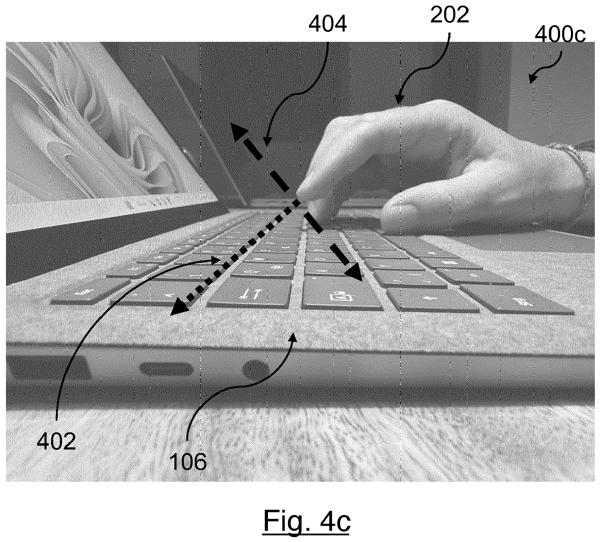

Fig. 4a illustrates a side view 400a in which the user has raised the finger 202 to perform a pointing gesture. In the illustrated embodiment, the user raises the finger 202 relatively far above the typing position, so that the pointing direction 402 is directed towards the display means 104. A vertical movement axis 404 of the finger 202 is also indicated in Fig. 4a. This way of pointing may be particularly easily recognizable by the sensor means 108, but may also be less comfortable for the user. In the side view 400a of Fig. 4b, the user raises the finger 202 less than in Fig. 4a so that the pointing direction 402 is different, but may nevertheless be interpreted and translated into pointer movements on the display. In the side view of Fig. 4c, the pointing direction 402 is even more pointing downwards since the user has raised the finger 202 only slightly above the keyboard 106. This pointing direction 402 may be particularly comfortable, as it is essentially similar to a hand position as if the user would use a conventional trackpad.

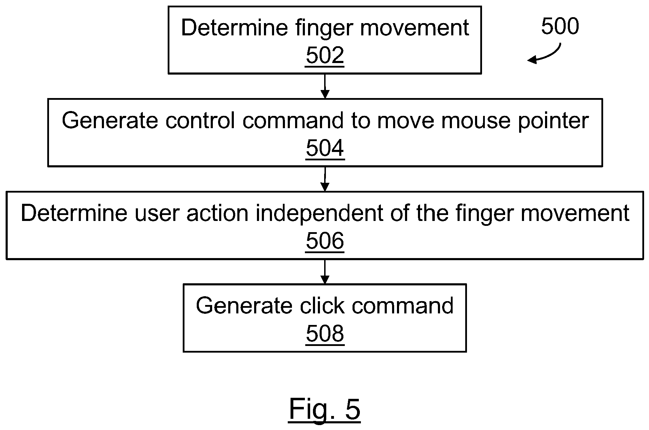

Fig. 5 illustrates an exemplary method 500 in accordance with embodiments of the invention. At least one finger movement is determined in Fig. 502. At least one control command is generated to move a mouse pointer in step 504. While a mouse pointer is mentioned in Fig. 5, any type of pointer can be controlled in a similar fashion. A user action independent of the at least one finger movement is determined in step 506, e.g., operation of the input element 204, and a click command is generated in 508.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A method (500) for touchless control of a computer device (102), wherein the computer device (102) comprises and/or is communicatively coupled to display means (104), sensor means (108) and, optionally, a keyboard (106), the sensor means (108) being configured for observing an interaction space (110) arranged at least partially above an interaction surface, such as a surface of the keyboard (106), a tabletop and/or lap of a user, the method comprising:
determining (502), based at least partially on sensor data captured using the sensor means (108), a movement of at least one finger (202), preferably of the fingertip of the at least one finger (202), of the user while the user's hands are arranged at least partially above the interaction surface; and
generating (504) at least one control command configured for manipulating content displayed on the display means (104) in accordance with the movement of the at least one finger.

2. The method of claim 1, wherein manipulating content displayed on the display means (104) comprises moving at least one pointer in accordance with the movement of the at least one finger (202);
wherein the at least one pointer comprises:
a mouse pointer; or
a user interface pointer; or
a text input cursor.

3. The method of claim 2, wherein moving the mouse pointer or the user interface pointer is performed in accordance with a first finger of the user and wherein moving the text input cursor is performed in accordance with a second finger of the user;
wherein, optionally, the first finger is a right index finger of the user and the second finger is a left index finger of the user, or vice-versa.

4. The method of any one of the preceding claims, further comprising:
generating (508) a click command in response to a user action which is independent of the movement of the at least one finger (202) used for generating at least one control command configured for manipulating content displayed on the display means (104);
wherein the user action comprises using at least one input element (204) arranged on and/or near the keyboard.

5. The method of any one of the preceding claims, wherein manipulating content displayed on the display means (104) comprises one or more of:
scrolling or swiping content in accordance with a movement of at least one finger;
deleting content, such as a most recently typed text portion, in accordance with a movement, such as a leftward movement, of at least one finger;
selecting a next input area in a form in accordance with a movement, such as a downward movement, of at least one finger;
performing a keyboard shortcut in accordance with a movement of at least one finger, in particular in accordance with a pre-defined gesture performed with at least one finger.

6. The method of any one of the preceding claims, wherein different types of manipulating content displayed on the display means (104) are discriminated based on one or more of:
at least one characteristic of the at least one finger and/or movement of the finger;
a velocity of the movement of the at least one finger (202);
an acceleration of the movement of the at least one finger (202);
a sequence of movements of the at least one finger (202);
a gesture performed with the at least one finger (202);
a posture of the at least one finger (202) relative to other fingers;
a bending of the at least one finger (202).

7. The method of any one of the preceding claims 2-6, wherein a position of the at least one finger (202) is translated into a position of the at least one pointer on the display means (104).

8. The method of any one of the preceding claims 2-6, wherein a position and/or movement and/or movement velocity and/or movement acceleration of the at least one finger (202) relative to a reference position is translated into a movement and/or movement velocity and/or movement acceleration of the at least one pointer;
wherein the reference position is a center point of the display means (104) or a position corresponding to a neutral posture of the at least one finger (202);
wherein, optionally, the movement and/or the movement velocity and/or the movement acceleration of the at least one pointer is based on a distance between the position of the at least one finger (202) and the reference position and/or a finger velocity and/or a finger acceleration.

9. The method of any one of the preceding claims 2-6, wherein the movement of the at least one finger takes place essentially in a finger movement plane comprising an x-axis and a y-axis;
wherein a movement of the at least one pointer is based on the movement of the at least one finger essentially in the finger movement plane.

10. The method of claim 9, wherein the finger movement plane is arranged essentially in parallel to a display surface of the display means, or produced by the display means; or
wherein the finger movement plane is arranged essentially perpendicular to a keyboard surface of the keyboard; or
wherein the finger movement plane is arranged essentially perpendicular to a pointing direction of the at least one finger.

11. The method of any one of the preceding claims, wherein the steps of determining (502) a movement of at least one finger (202) and generating (504) at least one control command configured for manipulating content displayed on the display means (104) are performed upon entering a gesture more in response to detecting a gesture mode activation event.

12. A data processing apparatus, preferably an electronic device, more preferably a computer device, comprising means for carrying out the method of any one of claims 1-11.

13. A system, comprising:
a computer device configured to receive and process sensor data;
sensor means, preferably including at least one sensor device, wherein the sensor means is configured for observing an interaction space arranged at least partially above an interaction surface, such as a surface of a keyboard associated with the computer device, a tabletop and/or lap of a user, wherein the computer device comprises and/or is communicatively coupled to the sensor means;
wherein the computer device is configured for performing the method of any one of claims 1-11;
optionally wherein the computer device comprises one or more of a processor, a non-transitory memory and/or a display means;
optionally wherein the computer device comprises and/or is communicatively coupled to a microphone;
optionally, wherein the computer device comprises and/or is communicatively coupled to a keyboard;
optionally wherein the computer device comprises a folding mechanism;
optionally wherein the computer device comprises a housing having integrated therein the sensor means;
optionally wherein the sensor means comprises at least two sensor devices, the at least two sensor devices being cameras of the same type, preferably two 2D-cameras, more preferably two infrared cameras, having an overlapping field of view and preferably being arranged spaced apart from each other, wherein at least one, preferably each, of the sensor devices is oriented to have a field of view being oriented essentially towards a bottom part of a display means of the computer device;
optionally wherein the computer device comprises and/or is communicatively coupled to an infrared laser projector configured to project an infrared laser pattern which is capturable by an infrared camera.

14. A sensor means, preferably including at least one sensor device, more preferably including at least two sensor devices, configured for use in a method according to any one of claims 1-11 and/or in a system according to claim 13.

15. A computer program or a computer-readable medium having stored thereon a computer program, the computer program comprising instructions which, when the program is executed by a computer, cause the computer to carry out the method of any one of claims 1-11.
